Europäisches Patentamt

European Patent Office

Office européen des brevets

(19)

(11) Veröffentlichungsnummer: **0 273 204**
**B1**

(12) **EUROPÄISCHE PATENTSCHRIFT**

(45) Veröffentlichungstag der Patentschrift:
12.09.90

(51) Int. Cl.⁵: **B23K 20/12**

(21) Anmeldenummer: 87117439.7

(22) Anmeldetag: 26.11.87

(54) Verfahren zum Reibschweissen.

(30) Priorität: 27.12.86 DE 3644577

(43) Veröffentlichungstag der Anmeldung:
06.07.88 Patentblatt 88/27

(45) Bekanntmachung des Hinweises auf die Patenterteilung:
12.09.90 Patentblatt 90/37

(84) Benannte Vertragsstaaten:
AT BE CH DE ES FR GB GR IT LI LU NL SE

(56) Entgegenhaltungen:
KONSTRUIEREN UND GIESSEN 11, Nr. 2, 1986 H.
RICHTER UND A. PALZKILL "Reibschweissen von Stahl
mit Gusseisen mit Kugelgraphit"

(73) Patentinhaber: Walter Hundhausen GmbH & Co KG,
Ostendamm 23, D-5840 Schwerte(DE)
Patentinhaber: KUKA Schweissanlagen & Roboter
GmbH, Blücherstrasse 144, D-8900 Augsburg(DE)

(72) Erfinder: Farrenkopf, Wolfgang, Schmiedgraben 25,
D-8904 Friedberg/Stätzling(DE)
Erfinder: Grünauer, Heinrich, Merianstrasse 2,
D-8900 Augsburg(DE)
Erfinder: Menzinger, Manfred, Hochstrasse 5,
D-8901 Kissing(DE)
Erfinder: Von Hirsch, Joachim, Dr.-Ing., Lange
Strasse 24, D-5840 Schwerte(DE)
Erfinder: Opitz, Reinhard, Dr.-Ing., Fleitmannweg 9,
D-4600 Dortmund(DE)

(74) Vertreter: Gramm, Werner, Dipl.-Ing. et al,
Patentanwälte Gramm + Lins
Theodor-Heuss-Strasse 2, D-3300 Braunschweig(DE)

## Beschreibung

Die Erfindung betrifft ein Verfahren zum Reibschweißen von Stahl mit Gußeisen mit Kugelgraphit, wobei zwischen den Kontaktflächen der Fügeteile durch Rotation eine Relativbewegung erzeugt und hierbei die Fügeteile mit ihren Kontaktflächen gegeneinander gedrückt werden (Reibdruck), worauf nach einer durch den Reibdruck erzielten Plastifizierung des Werkstoffes die Relativbewegung aufgehoben und die Fügeteile mit einem gegenüber dem Reibdruck höheren Druck (Stauchdruck) gegeneinander gedrückt werden.

Der Stand der Technik ergibt sich z.B. aus dem DVS-Merkblatt 2909 Teil 1 (März 1980). Demnach wird unterschieden zwischen Reibschweißen mit kontinuierlichem Antrieb, Reibschweißen mit Schwungantrieb und einem kombinierten Reibschweißen (Hybrid-Reibschweißen). Bei der letzten Variante ergeben sich als Hauptschweißparameter die Drehzahl, die flächenbezogene Reibkraft und Reibzeit/Reibweg, der Bremszeitpunkt und Stauchzeitpunkt sowie die flächenbezogene Stauchkraft und Stauchzeit.

Zum Stand der Technik wird ferner verwiesen auf die Aufsätze von Prof. Dr. H. Richter und Dipl.-Ing. A. Palzkill in "Schweißen und Schneiden" 37 (1985), Heft 2, Seiten 60 bis 65 ("Übertragung von Mikroreibschweißversuchen auf bauteilgroße Proben am Beispiel der Werkstoffkombination Baustahl/Gußeisen mit Kugelgraphit") und in "Konstruieren und Gießen" 11, (1986) Nr. 2. Seiten 33 bis 37 ("Reibschweißen von Stahl mit Gußeisen mit Kugelgraphit"). In der zuletzt genannten Veröffentlichung ist die Verfahrenstechnologie u.a. wie folgt beschrieben:

Das Reibscheißen beruht auf der durch Reibung erzeugten Wärmeentwicklung an den Berühungsflächen der zu verbindenden Werkstücke. Hierzu wird außer der relativen Drehbewegung Druck aufgebracht. Der Reibprozeß läuft innerhalb eines Zeitraumes von Sekundenbruchteilen bis zu einigen Sekunden ab, so daß die Wärmekonzentration an der Reibstelle zu Temperaturen bis etwa zum Schmelzpunkt des einen Partners führt. Das Material wird dabei hochplastisch und unter der Krafteinwirkung im allgemeinen aus der Schweißzone verdrängt, so daß sich ein Grat bildet. In der Schweißzone selbst werden dabei die atomaren Strukturen in so engen Kontakt gebracht, daß die elementaren Bindekräfte wirksam werden. Das richtige Zusammenwirken von Drehzahl bzw. Reibgeschwindigkeit, Reibkraft und eventuell Stauchkraft am Ende des Reibprozesses sowie die Reibzeit sind entscheidend für das Gelingen der Schweißverbindung. Beim Reibschweißen der Kombination aus Stahl und einem graphithaltigen Gußeisen muß außerdem mit der Wirkung des Graphits aus dem Gußeisen gerechnet werden, weil sich dadurch eine Schmierschicht aufbaut, die die intensive Reibung und damit die Temperaturentwicklung behindert.

Aus diesen Vorveröffentlichungen ergibt sich, daß eine tragende Verbindung von Stahl und Gußeisen mit Kugelgraphit grundsätzlich möglich ist, daß aber das Übergangsgefüge und die Schweißnahtstelle durch eine Veränderung der Graphitausbildung und des Grundgefüges gekennzeichnet sind. Die Verbindungen zeigen zwar metallurgisch einwandfreie Bindezonen, halten aber mechanischen Belastungen nicht ausreichend stand.

Der Erfindung liegt die Aufgabe zugrunde, das eingangs genannte Verfahren so zu verbessern, daß eine fehlerfreie tragende Verbindung zwischen den genannten Werkstoffen reproduzierbar für eine großtechnische Anwendung erzielt wird.

Diese Aufgabe wird gemäß der Erfindung durch folgende Merkmale gelöst:

a) Verwendung eines Gußeisens mit Kugelgraphit bei dessen Herstellung eine Zusammensetzung der Schmelze vor der kugelgraphitbildenden Magnesiumbehandlung mit

0,01–0,25% Mn,
0,01–0,05% Cr,
0,02–0,05% Cu,
0,01–0,02% P,
0,001–0,02% S,

sowie für die karbidstabilisierenden Spurenelemente, wie Wismut, Zinn, Selen, Tellur, Antimon, Molybdän, Vanadium, Titan, eine Summenkonzentration von maximal 0,15% gewählt wird, welches eine Gefügeausbildung mit 280–320 Graphitkugeln pro mm², 280–300 Ferritkörnern pro mm² und einen Anteil der Sphärolithen der gesamten Graphitscheidungen von > 95% aufweist;

b) die Reibzeit wird so eingestellt, daß im Betrieb der Reibschweißverbindung die Kohlenstoffdiffusion in den Stahl minimiert wird;

c) der Stauchdruck wird so hoch gewählt, daß sich eine quantitative Auspressung der aufgekohlten Schmelze aus dem Reibeschweißvorgang ergibt, aber ein Zusammendrücken des Kugelgraphits zu Lamellen vermieden wird.

Dieser Erfindung liegt die Erkenntnis zugrunde, daß die bisher festgestellten Nachteile u.a. auf das Zusammendrücken des Kugelgraphits im Gußeisen zurückzuführen sind. Erfindungsgemäß wurde daher das Auffinden von Parametern angestrebt, die dieses Plattieren verhindern, zugleich aber zu einer Festigkeit der Schweißverbindung führen, die dem Grundmaterial entspricht.

Die Erfindung beruht weiterhin auf der Erkenntnis, daß die Ursache der eingeschränkten Reibschweißneigung aus der durch die Reibungswärme gegebenen Kohlenstoffauflösung resultiert, die infolge der schnellen Wärmeableitung über das Werkstück zu Ledeburit- oder Martensitbildung und damit zur massiven Werkstoffversprödung führt. Gestörte Werkstückbearbeitung wie fehlende Duktilität und Spannungsrißbildung des Bauteiles sind die Folgen.

Aus den erfindungsgemäßen Untersuchungen hat sich ergeben, daß die nach dem Stand der Technik praktizierte Gußeisenzusammensetzung versprödende Elemente enhalten kann, die unmittelbar nach dem Reibschweißen zur Rißbildung und Werkstoffschädigung führen.

Die nach dem Stand der Technik angegebene Notwendigkeit einer Wärmebehandlung verteuert den Prozeß und kann primär also direkt nach dem Reibschweißvorgang entstandene Spannungsrisse nicht wieder beseitigen. Daraus ergab sich das Erfodernis, den tragenden Querschnitt der Reibschweißverbindung ohne nachträgliche Wärmebehandlung ledeburitfrei herzustellen. Deswegen war es ein Ziel der Erfindung, den Werkstoff Gußeisen mit Kugelgraphit für die Verwendung als reibschweißgeeigneten Werkstoff so weiter zu entwickeln, daß qualitätsverschlechternde Gefügeveränderunge, wie ledeburitisches oder martensitisches Gefüge aus em Einfluß der Reibschweißwärme, vermieden werden.

Bei den erfindungsgemäß verwendeten schweißgeeigneten Gußeisen mit Kupfergraphit handelt es sich um eine Weiterentwicklung des zum Stand der Technik gehörenden ferritischen Werkstoffs GGG-40.3.

Die quantitativen Maßstäbe für die Gefügeausbildung des erfindungsgemäß verwendeten Gußeisens mit Kugelgraphit sind im Merkmal a) des Anspruchs 1 angegeben. Die mechanischen Werkstoffeigenschaften des verwendeten Gußeisens mit Kugelgraphit sind in der Tabelle 1 den entsprechenden Eigenschaften des Werkstoffs GGG-40-3 gemäß DIN 1 693 gegenübergestellt.

Versprödende Elemente sind Mangan, Chrom und Kupfer sowie Phosphor, Schwefel und Spurenelemente. Bei der Herstellung des erfindungsgemäß verwendeten Gußeisens mit Kugelgraphit wird vorzugsweise eine Schmelzezusammensetzung vor der kugelgraphitbildenden Magnesiumbehandlung mit
0,01–0,25% Mn,
0,01–0,05% Cr,
0,02–0,05% Cu,
0,01–0,02% P,
0,001–0,02% S,
sowie für die karbidstabilisierenden Spurenelemente, wie Wismut, Zinn, Selen, Tellur, Antimon, Molybdän, Vanadin, Titan, eine Summenkonzentration von maximal 0,15% gewählt.

Aus dem Stand der Technik ist bekannt, daß das Element Silizium sich im Ferrit legiert und dort mit zunehmendem Gehalt zur Versprödung führt. Andererseits ist das Silizium ein wichtiges Legierungselement zur Förderung der Kohlenstoffausscheidung während der Erstarrung und damit zur Vermeidung zementitischer oder ledeburitischer Gefügeausbildung.

Zur Gewährleistung niedriger Siliziumgehalte bei optimaler stabiler eutektischer Erstarrung haben sich folgende vefahrenstechnische Schritte als bevorzugt ergeben:

Zur Förderung der Graphitkristallisation wird der Kohlenstoffgehalt in der Schmelze vorzugsweise zwischen 3,75 und 3,85% eingestellt. Der Siliziumgehalt der Basis-Schmelze wird vorzugsweise zwischen 2,14 und 2,16% eingestellt, wobei in vorteilhafter Weise ein zweistufiges Impfen der Schmelze bis auf den Endgehalt von 2,30±0,10% erfolgt. Ferner ist es vorteilhaft, zur Minimierung der verfahrensbedingten Unterkühlungsneigung und damit zur Vermeidung karbidischer Erstarrung die Reinmagnesiumbehandlung im GF-Konverter auf 0,045±0,005% Mg einzustellen.

Als Ergebnis der Zusammensetzung und der Behandlungsmethoden der Schmelze werden Eigenschaften erreicht, die zu einer weitgehenden Übereinstimmung mit den Stahleigenschaften führen und damit die grundlegende Voraussetzung für eine einheitliches Werkstoffverhalten nach dem Reibschweißen erfüllen.

Zur Lösung der eingangs genannte Aufgabe war aber nicht nur die Entwicklung des erfindungsgemäß verwendeten Gußeisens mit Kugelgraphit erforderlich; vielmehr mußten auch die für das Reibschweißen wesentlichen Verfahrensparameter erfindungsgemäß angepaßt werden. Durch eine Verkürzung der bisher üblichen Reibzeit läßt sich die die Kohlenstoffdiffusion in den Stahl im Bereich der Reibschweißverbindung minimieren. Durch Erhöhung des bisher üblichen Stauchdruckes erhält man eine quantitative Auspressung der aufgekohlten Schmelze aus dem Reibschweißvorgang und damit eine Beseitigung ledeburitischer oder martensitischer Gefüge. Dabei muß der Stauchdruck auf einen solchen Betrag eingestellt werden, bei dem das Plattieren der Graphitkugeln zu Lamellen vermieden wird.

Tabelle 1

Mechanische Werkstoffeigenschaften des erfindungsgemäß verwendeten Gußeisens mit Kugelgraphit

(Schweißqualität; ermittelt an Y-Proben nach DIN 1 693)

Probenanzahl $\eta = 115$ (3. 06. bis 9. 10. 86)

| | Zug-festig-keit | Streck-grenze | Dehnung | Härte | Kerbschlagarbeit (DVM) AV (J) | | | | | |
|---|---|---|---|---|---|---|---|---|---|---|
| | $R_m$ (N/mm²) | $R_p$ (N/mm²) | $A_5$ (%) | (HB) | +20°C | 0°C | −20°C | −40°C | −60°C | −80°C |
| X | 420 | 297 | 25,4 | 158 | 19 | 19 | 17 | 13 | 8 | 5 |
| S | 5,1 | 4,0 | 1,5 | 3,4 | 0,8 | 1,0 | 1,0 | 1,2 | 1,5 | 1,5 |
| max | 434 | 305 | 28,3 | 165 | 20 | 19 | 19 | 15 | 10 | 6 |
| min | 409 | 287 | 20,7 | 150 | 15 | 15 | 14 | 13 | 6 | 4 |
| DIN 1 693 GGG-40.3 | 400 | 250 | 18 | | | | 14 | | | |

## Patentansprüche

1. Verfahren zum Reibschweißen von Stahl mit Gußeisen mit Kugelgraphit, wobei zwischen den Kontaktflächen der Fügeteile durch Rotation eine Relativbewegung erzeugt und hierbei die Fügeteile mit ihren Kontaktflächen gegeneinander gedrückt werden, worauf nach einer durch den Reibdruck erzielten Plastifizierung des Werkstoffes die Relativbewegung aufgehoben und die Fügeteile mit einem gegenüber dem Reibdruck höheren Stauchdruck gegeneinander gedrückt werden, gekennzeichnet durch folgende Merkmale:

a) Verwendung eines Gußeisens mit Kugelgraphit bei dessen Herstellung eine Zusammensetzung der Schmelze vor der kugelgraphitbildenden Magnesiumbehandlung mit
0,01–0,25% Mn,
0,01–0,05% Cr,
0,02–0,05% Cu,
0,01–0,02% P,
0,001–0,02% S,
sowie für die karbidstabilisierenden Spurenelemente, wie Wismut, Zinn, Selen, Tellur, Antimon, Molybdän, Vanadin, Titan, eine Summenkonzentration von maximal 0,15% gewählt wird, welches eine Gefügeausbildung mit 280–320 Graphitkugeln pro mm² 280–300 Ferritkörnern pro mm² und einen Anteil der Sphärolithen der gesamten Graphitabscheidungen von >95% aufweist;

b) die Reibzeit wird so eingestellt, daß im Bereich der Reibschweißverbindung die Kohlenstoffdiffusion in den Stahl minimiert wird;

c) der Stauchdruck wird so hoch gewählt, daß sich eine quantitative Auspressung der aufgekohlten Schmelze aus dem Reibschweißvorgang ergibt, aber ein Zusammendrücken des Kugelgraphits zu Lamellen vermieden wird.

2. Verfahren nach Anpsruch 1, gekennzeichnet durch einen Reibdruck von ca. 22 bar.

3. Verfahren nach Anspruch 1 oder 2, gekennzeichnet durch einen Stauchdruck von ca. 86 bar.

4. Verfahren nach Anspruch 1, 2 oder 3, gekennzeichnet durch eine Reibzeit von ca. 40 s.

5. Verfahren nach einem der vorhergehenden Ansprüche, dadurch gekennzeichnet, daß bei der Herstellung des genannten Gußeisens der Kohlenstoffgehalt in der Schmelze zwischen 3,75 und 3,85% eingestellt wird.

6. Verfahren nach einem der vorhergehenden Ansprüche, dadurch gekennzeichnet, daß bei der Herstellung des genannten Gußeisens der Siliziumgehalt der Basis-Schmelze zwischen 2,14 und 2,16% eingestellt wird und ein zweistufiges Impfen der Schmelze bis auf einen Endgehalt von 2,30±0,10% erfolgt.

7. Verfahren nach einem der vorhergehenden Ansprüche, dadurch gekennzeichnet, daß bei der Herstellung des genannten Gußeisens die Reinmagnesiumbehandlung im GF-Konverter auf 0,045±0,005% eingestellt wird.

4

## EP 0 273 204 B1

**Revendications**

1. Procédé pour souder par friction de l'acier avec de la fonte à graphite sphéroïdal, dans lequel on produit par rotation un mouvement relatif entre les surfaces de contact des parties à assembler, et dans lequel on presse en même temps ces dernières l'une contre l'autre par leurs surfaces de contact, après quoi après une plastification du matériau obtenu par la pression de friction, on cesse le mouvement relatif et on presse l'une contre l'autre les parties à assembler sous une pression de refoulement supérieure à la pression de friction, caractérisé par les particularités suivantes:

a) on utilise une fonte à graphite sphéroïdal pour la production de laquelle on choisit, avant le traitement au magnésium qui forme les sphères de graphite, un bain fondu ayant la composition suivante:

0,01 à 0,25% de Mn
0,01 à 0,05% de Cr
0,02 à 0,05% de Cu
0,01 à 0,02% de P
0,001 à 0,02% de S

et une teneur cumulée maximale de 0,15% pour les éléments présents à titre de traces, qui stabilisent les carbures, tels que bismuth, étain, sélénium, tellure, antimoine, molybdène, vanadium, titane, cette fonte présentant une structure cristalline avec 280 à 320 sphères de graphite par mm$^2$, 280 à 300 grains de ferrite par mm$^2$, et une proportion de sphérolithes supérieure à 95% dans l'ensemble du graphite précipité;

b) on règle la durée de friction de façon à minimiser la diffusion du carbone dans l'acier dans la région de la soudure par friction;

c) on choisit la pression de refoulement à une valeur suffisante pour qu'il résulte du processus de soudage par friction une expulsion quantitative du métal fondu recarburé, mais en évitant que les sphères de graphite soient aplaties en lamelles.

2. Procédé selon la revendication 1, caractérisé par une pression de friction d'environ 22 bar.

3. Procédé selon l'une des revendications 1 ou 2, caractérisé par une pression de refoulement d'environ 86 bar.

4. Procédé selon l'une des revendications 1, 2 ou 3, caractérisé par une durée de friction d'environ 40 secondes.

5. Procédé selon l'une des revendications précédentes, caractérisé en ce que, lors de la production de ladite fonte, on règle entre 3,75 et 3,85% la teneur en carbone dans le bain fondu.

6. Procédé selon l'une des revendications précédentes, caractérisé en ce que, lors de la production de ladite fonte, on règle la teneur en silicium du bain fondu de base entre 2,14 et 2,16%, puis on procède à une injection en deux étapes dans le bain fondu jusqu'à obtenir une teneur finale de 2,30 ± 0,10%.

7. Procédé selon l'une des revendications précédentes, caractérisé en ce que, lors de la production de ladite fonte, on règle le traitement au magnésium pur dans le convertisseur GF à 0,045 ± 0,005%.

**Claims**

1. Method of friction welding steel to spheroidal graphite cast iron, a relative motion being generated by rotation between the contact surfaces of the joining members and, as a result, the contact surfaces of the joining members being forced against each other, whereupon the relative motion is stopped after a plasticization of the material effected by the friction pressure and the joining members are forced against each other by a forging pressure higher than the friction pressure, characterized by the following features:

a) use of a spheroidal graphite cast iron, in the production of which a composition of the melt, before the magnesium treatment forming the spheroidal graphite, with

0.01–0.25% of Mn,
0.01–0.05% of Cr,
0.02–0.05% of Cu,
0.01–0.02% of P,
0.001–0.02% of S,

and a total concentration of at most 0.15% for the carbide-stabilizing trace elements such as bismuth, tin, selenium, tellurium, antimony, molybdenum, vanadium and titanium is selected, which cast iron has a structural constitution with 280–320 graphite spheres per mm$^2$, 280–300 ferrite grains per mm$^2$ and a proportion of spherolites in the total graphite precipitations of > 95 %;

b) the friction time is adjusted such that carbon diffusion into the steel in the region of the fiction-welding joint is minimized, and

c) the forging pressure is selected at such a level that it results in quantitative forcing-out of the carburized melt from the friction welding step, but compression of the spheroidal graphite into lamellae is avoided.

2. Method according to Claim 1, characterized by a friction pressure of about 22 bar.

3. Method according to Claim 1 or 2, characterized by a forging pressure of about 86 bar.

4. Method according to Claim 1, 2 or 3, characterized by a friction tine of about 40 seconds.

5

5. Method according to one of the preceding claims, characterized in that, in the production of the said cast iron, the carbon content in the melt is set to between 3.75 and 3.85%.

6. Method according to one of the preceding claims, characterized in that, in the production of the said cast iron, the silicon content of the base melt is set to between 2.14 and 2.16% and two-stage seeding of the melt up to an end content of 2.30±0.10% is carried out.

7. Method according to one of the preceding claims, characterized in that, in the production of the said cast iron, the treatment with pure magnesium in the GF convertor is set to 0.045±0.005%.